# EUROPEAN PATENT APPLICATION

(11) **EP 4 773 594 A1**
(43) Date of publication of application: **08.07.2026**
(21) Application number: 24915478.2
(22) Date of filing: 11.12.2024
(51) Int. Cl.: H04N 13/366, H04N 13/117, G06V 40/16, G06N 3/02, H04N 13/344

(54) **DISPLAY DEVICE AND CONTROL METHOD THEREOF**

(30) Priority: 05.01.2024 KR 20240002372; 17.04.2024 KR 20240051299
(71) Applicant: Samsung Electronics Co., Ltd., Suwon-si, Gyeonggi-do 16677 (KR)
(72) Inventor: YOON, Daewon, Suwon-si Gyeonggi-do 16677 (KR)
(74) Representative: Gulde & Partner
(86) International application number: PCT/KR2024/096711
(87) International publication number: WO 2025/147068

(57) **Abstract**

A display apparatus including a memory that stores information associated with a reference coordinate system defined with respect to an image and information associated with a plurality of reference points; a display; and at least one processor that controls the display to display a 3D image corresponding to a direction of a face of a user. The at least one processor based on obtaining a current image in which the face and shoulders of the user are identified, tracks the plurality of reference points in the current image, identifies coordinates of the plurality of reference points in the current image with respect to the reference coordinate system based on the information associated with the reference coordinate system, and identifies the direction of the face of the user based on the coordinates of the plurality of reference points identified in the current image.

## Description

### [Technical Field]

The present disclosure relates to a display apparatus and a control method thereof, and more particularly, to a display apparatus for displaying a three-dimensional (3D) image and a control method thereof.

### [Background Art]

As display apparatuses have evolved, types of images displayed on the display apparatuses have also diversified. Display apparatuses capable of displaying not only twodimensional (2D) images but also three-dimensional (3D) images are being developed.

To display an immersive 3D image to a user, the display apparatus may be required to accurately identify a gaze direction of the user. In this case, to accurately identify the gaze direction of the user, the display apparatus may use a technique of tracking the position and direction of a user face based on an image in which the user is captured, without using a physical sensor.

### [Disclosure]

### [Technical Solution]

According to an embodiment of the present disclosure, provided is a display apparatus including: a memory to store information on a reference coordinate system defined with respect to an image and information associated with a plurality of reference points with respect to the image including coordinates of the plurality of reference points in the image having a frame and pixel values of pixels corresponding to the coordinates of the plurality of reference points that are in the frame of the image. The display apparatus may include a display; and at least one processor configured to control the display to display a three-dimensional (3D) image in association with a direction of a face of a user. The at least one processor is configured to: based on obtaining a current image in which the face and shoulders of the user are identified, track the plurality of reference points in the current image based on the information on the plurality of reference points; identify coordinates of the plurality of reference points in the current image with respect to the reference coordinate system based on the information on the reference coordinate system; and identify the direction of the face of the user based on the coordinates of the plurality of reference points identified in the current image, wherein the plurality of reference points include a reference point corresponding to a position of the user face and reference points corresponding to positions of the shoulders of the user.

The plurality of reference points may include a first reference point corresponding to a central point of the user face, and wherein the at least one processor is configured to: based on obtaining an initial image in which the face and the shoulders of the user are identified, identify a plurality of feature points in the initial image; identify the plurality of reference points in the initial image based on positions of the plurality of feature points; and identify the reference coordinate system having the first reference point as an origin in the initial image based on a positional relationship among the plurality of reference points in the initial image and store the information on the reference coordinate system in the memory, wherein the plurality of feature points include a plurality of points used to recognize the face and the shoulders of the user.

The at least one processor may be configured to: identify a circle corresponding to the user face based on the coordinates of the plurality of reference points identified in the current image; and identify the direction of the face of the user by identifying a position of the circle with respect to the reference coordinate system based on the information on the reference coordinate system.

The plurality of reference points may include a first reference point, a second reference point, and a third reference point, the first reference point being a point corresponding to a central point of the user face, the second reference point being a point corresponding to a left shoulder of the user, and the third reference point being a point corresponding to a right shoulder of the user, and wherein the at least one processor may be configured to: based on obtaining the current image, track the first reference point, the second reference point, and the third reference point in the current image based on the information on the plurality of reference points; identify an upper body direction of the user by identifying coordinates of the second and third reference points with respect to the reference coordinate system based on the information on the reference coordinate system; identify a circle corresponding to the user face based on the upper body direction of the user and coordinates of the first reference point with respect to the reference coordinate system; and identify the direction of the face of the user by identifying a position of the circle with respect to the reference coordinate system.

The plurality of reference points may further include a fourth reference point and a fifth reference point, the fourth reference point being a point corresponding to a left jaw point of the user, and the fifth reference point being a point corresponding to a right jaw point of the user, and wherein the at least one processor may be configured to: based on obtaining the current image, track the first reference point, the second reference point, the third reference point, the fourth reference point, and the fifth reference point in the current image based on the information on the plurality of reference points; and identify the circle corresponding to the user face based on the upper body direction of the user and coordinates of the first, fourth, and fifth reference points with respect to the reference coordinate system.

The at least one processor may be configured to: based on the plurality of reference points not being tracked in images obtained for a predetermined number of frames, delete the information on the reference coordinate system and the information on the plurality of reference points from the memory; identify, as an initial image, an image in which the face and the shoulders of the user are identified among images obtained after the predetermined number of frames; and identify the plurality of reference points and the reference coordinate system in the initial image and store information on the identified plurality of reference points and information on the identified reference coordinate system in the memory.

The at least one processor may be configured to: delete the information on the reference coordinate system and the information on the plurality of reference points from the memory at each interval of a predetermined number of frames; identify, as an initial image, an image in which the face and shoulders of the user are identified among images obtained after the predetermined number of frames; and identify the plurality of reference points and the reference coordinate system in the initial image and store information on the identified plurality of reference points and information on the identified reference coordinate system in the memory.

The at least one processor may be configured to: based on obtaining the current image, identify movement of the plurality of reference points based on the coordinates of the plurality of reference points in the image of the previous frame and the pixel values of the pixels corresponding to the coordinates of the plurality of reference points in the image of the previous frame; and track the plurality of reference points in the current image based on the identified movement.

The memory may store a neural network model, wherein the neural network model is trained to: receive the information on the reference coordinate system and the coordinates of the plurality of reference points with respect to the reference coordinate system; identify a circle corresponding to the user face based on the coordinates of the plurality of reference points; and output an angle of the direction of the face of the user based on a position of the identified circle with respect to the reference coordinate system, and wherein the at least one processor may be configured to: identify the direction of the face of the user based on the output angle of the direction of the face of the user obtained by inputting the coordinates of the plurality of reference points in the current image and the information on the reference coordinate system into the neural network model.

The device may further include a camera, wherein the at least one processor is configured to: based on obtaining the current image through the camera, track the plurality of reference points in the current image based on the information on the plurality of reference points.

According to an embodiment of the present disclosure, provided is a control method of a display apparatus, the method including: based on obtaining a current image in which a face and shoulders of a user are identified, tracking a plurality of reference points in the current image based on information associated wtih the plurality of reference points including coordinates of the plurality of reference points in an image having a frame and pixel values of pixels corresponding to the coordinates of the plurality of reference points that are in the frame of the image; identifying coordinates of the plurality of reference points in the current image with respect to a reference coordinate system based on information on the reference coordinate system; identifying a direction of the face of the user based on the coordinates of the plurality of reference points identified in the current image; and displaying a three-dimensional (3D) image corresponding to the identified direction of the face of the user, wherein the plurality of reference points include a reference point corresponding to a position of the user face and a reference point corresponding to position of the shoulders of the user.

The plurality of reference points may include a first reference point corresponding to a central point of the user face, and the method may further include: based on obtaining an initial image, in which the face and the shoulders of the user are identified, identifying a plurality of feature points in the initial image; identifying the plurality of reference points in the initial image based on positions of the plurality of feature points; and identifying the reference coordinate system having the first reference point as an origin in the initial image based on a positional relationship among the plurality of reference points in the initial image and storing the information on the reference coordinate system, wherein the plurality of feature points include a plurality of points used to recognize the face and shoulders of the user.

The identifying of the user face direction may include: identifying a circle corresponding to the user face based on the coordinates of the plurality of reference points identified in the current image; and identifying the user face direction by identifying a position of the circle with respect to the reference coordinate system based on the information on the reference coordinate system.

The plurality of reference points may include a first reference point, a second reference point, and a third reference point, the first reference point being a point corresponding to a central point of the user face, the second reference point being a point corresponding to a left shoulder of the user, and the third reference point being a point corresponding to a right shoulder of the user, and the control method may include: based on obtaining the current image, tracking the first reference point, the second reference point, and the third reference point in the current image based on the information on the plurality of reference points; identifying an upper body direction of the user by identifying coordinates of the second and third reference points with respect to the reference coordinate system based on the information on the reference coordinate system; identifying a circle corresponding to the user face based on the upper body direction of the user and coordinates of the first reference point with respect to the reference coordinate system; and identifying the user face direction by identifying a position of the circle with respect to the reference coordinate system.

The plurality of reference points may further include a fourth reference point and a fifth reference point, the fourth reference point being a point corresponding to a left jaw point of the user, and the fifth reference point being a point corresponding to a right jaw point of the user, the method may further include: based on obtaining the current image, tracking the first reference point, the second reference point, the third reference point, the fourth reference point, and the fifth reference point in the current image based on the information on the plurality of reference points; and identifying the circle corresponding to the user face based on the upper body direction of the user and coordinates of the first, fourth, and fifth reference points with respect to the reference coordinate system.

The method may include: based on the plurality of reference points not being tracked in images obtained for a predetermined number of frames, deleting the information on the reference coordinate system and the information on the plurality of reference points; identifying, as an initial image, an image in which the face and the shoulders of the user are identified among images obtained after the predetermined number of frames; and identifying the plurality of reference points and the reference coordinate system in the initial image and storing information on the identified plurality of reference points and information on the identified reference coordinate system.

The method may include: deleting the information on the reference coordinate system and the information on the plurality of reference points at each interval of a predetermined number of frames; identifying, as an initial image, an image in which the face and shoulders of the user are identified among images obtained after the predetermined number of frames; and identifying the plurality of reference points and the reference coordinate system in the initial image and storing information on the identified plurality of reference points and information on the identified reference coordinate system.

The tracking of the plurality of reference points may include: based on obtaining the current image, identifying movement of the plurality of reference points based on the coordinates of the plurality of reference points in the image of the previous frame and the pixel values of the pixels corresponding to the coordinates of the plurality of reference points in the image of the previous frame; and tracking the plurality of reference points in the current image based on the identified movement.

The method may include: identifying the user face direction based on the output angle of the user face direction obtained by inputting the coordinates of the plurality of reference points in the current image and the information on the reference coordinate system into a neural network model, wherein the neural network model is trained to: receive the information on the reference coordinate system and the coordinates of the plurality of reference points with respect to the reference coordinate system; identify a circle corresponding to the user face based on the coordinates of the plurality of reference points; and output an angle of the user face direction based on a position of the identified circle with respect to the reference coordinate system.

According to an embodiment of the present disclosure, provided is a non-transitory computer-readable recording medium storing computer instructions executable by a processor of a display apparatus, cause the display apparatus to perform a control method. The method may include, based on obtaining an image in which a face of a user is identified, identifying a plurality of reference points in the image based on information associated with the plurality of reference points including coordinates of the plurality of reference points in an image having a frame and pixel values of pixels corresponding to the coordinates of the plurality of reference points that are in the frame of the image; identifying coordinates of the plurality of reference points with respect to a reference coordinate system based on information on the reference coordinate system; and identifying a direction of the face of the user based on the coordinates of the plurality of reference points, wherein the plurality of reference points include a reference point corresponding to a position of the user face of the user and reference points corresponding to positions of the shoulders of the user.

### [Description of Drawings]

FIG. 1 is a diagram illustrating an operation of a display apparatus according to at least one embodiment of the present disclosure.
FIG. 2 is a block diagram illustrating a configuration of the display apparatus according to at least one embodiment of the present disclosure.
FIG. 3 is a detailed block diagram illustrating a configuration of the display apparatus according to at least one embodiment of the present disclosure.
FIG. 4 is a diagram illustrating a method in which the display apparatus sets a reference coordinate system according to at least one embodiment of the present disclosure.
FIG. 5 is a diagram illustrating a method in which the display apparatus identifies a user face direction according to at least one embodiment of the present disclosure.
FIG. 6 is a diagram illustrating a method in which the display apparatus identifies the user face direction according to at least one embodiment of the present disclosure.
FIG. 7 is a diagram illustrating a method of identifying the user face direction based on a neural network model according to at least one embodiment of the present disclosure.
FIG. 8 is a flowchart illustrating a method in which the display apparatus displays a three-dimensional (3D) image according to at least one embodiment of the present disclosure.
FIG. 9 is a flowchart illustrating a method in which the display apparatus stores information on the reference coordinate system according to at least one embodiment of the present disclosure.

### [Mode for Invention]

The present disclosure may be variously modified and have several embodiments, and specific embodiments of the present disclosure are thus illustrated in the accompanying drawings and described in detail in the specification. However, it should be understood that the scope of the present disclosure is not limited to specific embodiments, and includes all modifications, equivalents, and alternatives according to an embodiment of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art**.**

Terms used in the present disclosure are used only to describe the specific embodiments rather than limit the scope of the present disclosure. A term of a singular number may include its plural number unless explicitly indicated otherwise in the context.

In the present disclosure, the expression such as "have," "may have," "include," or "may include," indicates the presence of a corresponding feature (e.g., a numerical value, a function, an operation, or a component such as a part), and does not exclude the presence of an additional feature.

In the present disclosure, the expression such as "A or B," "least one of A and/or B," or "one or more of A and/or B" may include all possible combinations of items enumerated together. For example, "A or B," "at least one of A and B," or "at least one of A or B" may indicate all of 1) a case in which at least one A is included, 2) a case in which at least one B is included, or 3) a case in which both of at least one A and at least one B are included.

Expressions such as "first" and "second," used in the present disclosure, may indicate various components regardless of the sequence and/or importance of the components. These expressions are only used to distinguish one component and another component from each other, and do not limit the corresponding components.

When any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

On the other hand, when any component (e.g., the first component) is mentioned to be "directly coupled with/to" or "directly connected to" another component (e.g., the second component), it should be understood that yet another component (e.g., the third component) is not present between any component and another component.

An expression such as "configured (or set) to," used in the present disclosure, may be replaced by an expression such as "suitable for," "having the capacity to," "designed to," "adapted to," "made to," or "capable of," depending on a context. The expression "configured (or set) to" does not necessarily indicate "specifically designed to" in terms of hardware.

Instead, the expression "a device configured to," in any context, may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In an embodiment, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in detail with reference to the accompanying drawings so that those skilled in the art to which the present disclosure pertains may easily practice the present disclosure.

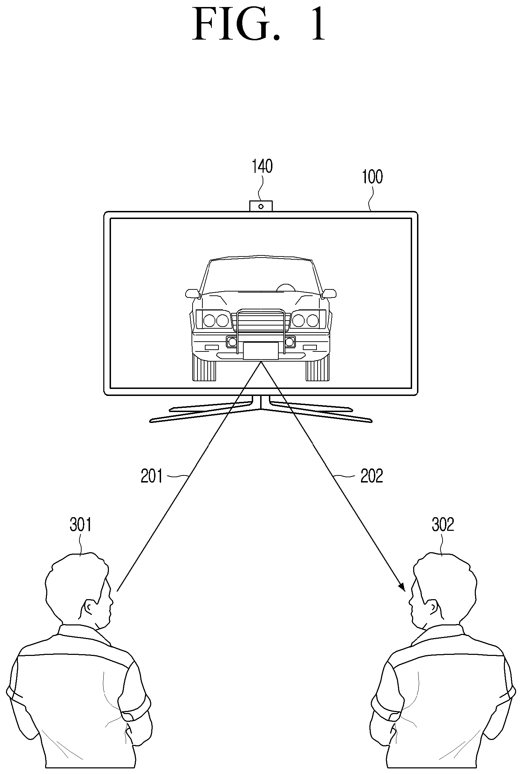

FIG. 1 is a diagram illustrating an operation of a display apparatus according to at least one embodiment of the present disclosure.

Referring to FIG. 1, a display apparatus 100 may display a three-dimensional (3D) image by providing light to a user based on the identified position and direction of a user face.

According to an embodiment, the display apparatus 100 may provide first light 201 to a first user 301 positioned at a first position and facing a first direction, and may provide second light 202 to a second user 302 positioned at a second position and facing a second direction.

For example, it is assumed that the display apparatus 100 displays a vehicle. The first user 301 positioned at the first position and facing the first direction may receive the first light 201, and may thus view an image including only the right side surface and front surface of the vehicle. On the other hand, the second user 302 positioned at the second position and facing the second direction may receive the second light 202, and may thus view an image including only the left side surface and front surface of the vehicle.

Here, the first position may correspond to "a position moved to the right of a front surface of the display apparatus 100," and the first direction may correspond to "a direction rotated by an angle greater than 0 degrees and less than 45 degrees in a clockwise direction about a direction in which the user faces the display apparatus 100 frontally."

In addition, the second position may correspond to "a position moved to the left of the front surface of the display apparatus 100," and the second direction may correspond to "a direction rotated by an angle greater than 0 degrees and less than 45 degrees in a counterclockwise direction about the direction in which the user faces the display apparatus 100 frontally."

As illustrated in FIG. 1, the display apparatus 100 may obtain an image of the user through a camera 140, and may identify the position and direction of the user face based on the obtained image. However, a position of the camera 140 illustrated in FIG. 1 is merely an example, and the camera 140 may be positioned on the side surface or lower portion of the display apparatus 100, or may be positioned at a position spaced apart from the display apparatus 100. In addition, the display apparatus 100 may be connected to an external camera device through an interface.

As illustrated in FIG. 1, the display apparatus 100 may be implemented as a light field display apparatus, which is merely an example, and the display apparatus 100 according to the present disclosure may be implemented as various devices capable of displaying a three-dimensional (3D) image, such as a head mounted display or a hologram projector.

For example, the display apparatus 100 according to the present disclosure may be implemented as a head-up display apparatus. When the display apparatus 100 is implemented as the head-up display apparatus, the display apparatus 100 may provide different three-dimensional (3D) images related to driving of a driver based on the position and direction of a driver face. In addition, the display apparatus 100 may determine a position at which a three-dimensional (3D) image related to driving of the driver is displayed based on the position and direction of the driver face.

In another example, the display apparatus 100 according to the present disclosure may be implemented as a hologram projector. When the display apparatus 100 is implemented as the hologram projector, the display apparatus 100 may project different three-dimensional (3D) hologram images based on the position and direction of the user face. In addition, the display apparatus 100 may determine a space in which the three-dimensional (3D) hologram image is projected based on the position and direction of the user face.

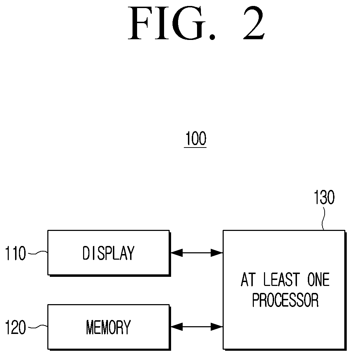

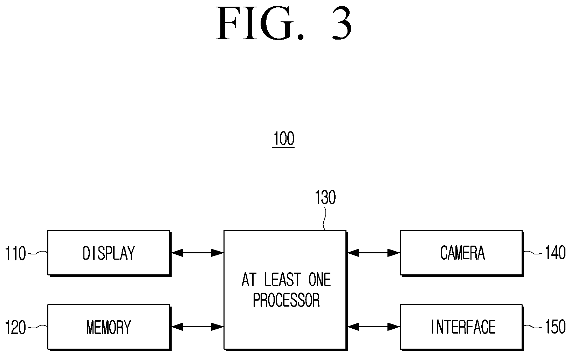

As described above, the display apparatus 100 may provide different images based on the user face position and the user face direction, and accordingly, the user may perceive a stereoscopic effect of an object included in the image. The following descriptions provided with reference to FIGS. 2 and 3 describe a configuration of the display apparatus 100 and a detailed operation method of the display apparatus 100 together.

FIG. 2 is a block diagram illustrating a configuration of the display apparatus according to at least one embodiment of the present disclosure.

Referring to FIG. 2, the display apparatus 100 may include a display 110, a memory 120, and at least one processor 130.

The display 110 is a component capable of displaying a three-dimensional (3D) image. The display 110 may include a backlight, a base panel, and an optical layer.

According to an embodiment, the backlight may generate light and provide the light toward the user. In this case, the light generated by the backlight may be white light.

According to an embodiment, the base panel may include a plurality of pixels. When the base panel is a liquid crystal display, the base panel may be a filter layer including a plurality of color filters. In an embodiment, each of the plurality of pixels may correspond to the color filter.

According to an embodiment, light provided from the backlight may pass through the base panel and reach the optical layer. The optical layer may refract, reflect, or diffuse light passing through the base panel. Specifically, light passing through the base panel may be steered in a specific direction by the optical layer. The optical layer may include components such as a microlens array (MLA), a lenticular lens, or a diffraction grating array.

In the description provided above, the display 110 is described as including the backlight, which is merely an example, and the display 110 may not include a backlight. When the display 110 does not include a backlight, the base panel may be implemented as a panel including a self-emissive element.

The memory 120 may store data required for implementing various embodiments of the display apparatus 100 according to at least one embodiment of the present disclosure. The memory 120 may store information on a reference coordinate system defined in an initial image and information on a plurality of reference points.

The memory 120 may be implemented as a memory embedded in the display apparatus 100 or as a memory detachable from the display apparatus 100 depending on a data storage purpose. For example, data for driving the display apparatus 100 may be stored in the memory embedded in the display apparatus 100, and data for an extended function of the display apparatus 100 may be stored in the memory detachable from the display apparatus 100.

Meanwhile, the memory embedded in the display apparatus 100 may be implemented as at least one of a volatile memory (e.g., a dynamic random access memory (DRAM), a static random access memory (SRAM), or a synchronous dynamic random access memory (SDRAM)), or a non-volatile memory (e.g., a one time programmable read only memory (OTPROM), a programmable read only memory (PROM), an erasable and programmable read only memory (EPROM), an electrically erasable and programmable read only memory (EEPROM), a mask read only memory (ROM), a flash read only memory (ROM), a flash memory (e.g., a NAND flash or a NOR flash), a hard drive, or a solid state drive (SSD)).

In addition, the memory detachable from the display apparatus 100 may be implemented as a memory card (e.g., a compact flash (CF), a secure digital (SD), a micro secure digital (Micro-SD), a mini secure digital (Mini-SD), an extreme digital (xD), or a multi-media card (MMC)), an external memory connectable to a universal serial bus (USB) port (e.g., a USB memory), or the like.

The memory 120 may include various instructions required for an operation of at least one processor 130. Here, the instructions may include instructions for tracking the plurality of reference points, instructions for identifying coordinates of the plurality of reference points, instructions for identifying the user face direction, instructions for identifying a plurality of feature points in an initial image, instructions for identifying the plurality of reference points based on positions of the plurality of feature points, or the like.

In the present disclosure, the "initial image" may refer to an image used by the display apparatus 100 to identify the plurality of reference points and the reference coordinate system in the face and shoulders of the user. For example, the "initial image" may include an image in which the face and shoulders of the user are displayed frontally. The "initial image" does not necessarily refer only to an image in which the face and shoulders of the user are first recognized, and an image in which the plurality of reference points and the reference coordinate system are clearly identified as an image in which the face and shoulders of the user are clearly displayed may be identified as the "initial image," even if the image is obtained by the display apparatus 100 at a later time.

Here, the "initial image" may be referred to by being replaced with various expressions representing the same or similar concept. For example, the "initial image" may be replaced with various terms such as a "reference image," an "original image," a "first image," or a "base image." In the present disclosure, the expression "initial image" is used as a generic term.

In the present disclosure, the "plurality of feature points" may refer to characteristic points used by the display apparatus 100 to identify the face and shoulders of the user, and may include a plurality of points respectively corresponding to a plurality of components included in the face and shoulders of the user. For example, the "plurality of feature points" may include the eyes, nose, mouth, ears, jaw, face outline, or the like included in the user face, and may include the corner points, outlines, or the like of the user shoulders.

Here, the "plurality of feature points" may be referred to by being replaced with various expressions representing the same or similar concept. For example, the "plurality of feature points" may be replaced with various terms such as a "plurality of landmarks," a "plurality of feature elements," a "plurality of marks," or a "plurality of singular points." In the present disclosure, the expression "plurality of feature points" is used as a generic term.

In the present disclosure, the "plurality of reference points" may refer to points tracked by the display apparatus 100 to identify the position and direction of the user face. For example, the "plurality of reference points" may include a point corresponding to a central point of the user face, a point corresponding to a left shoulder of the user, a point corresponding to a right shoulder of the user, a point corresponding to a left jaw of the user, a point corresponding to a right jaw of the user, and the like.

Here, the "plurality of reference points" may be referred to by being replaced with various expressions representing the same or similar concept. For example, the "plurality of reference points" may be replaced with various terms such as a "plurality of markers," a "plurality of comparison points," a "plurality of standard points," a "plurality of comparison reference points." In the present disclosure, the expression "plurality of reference points" is used as a generic term.

In the present disclosure, the "reference coordinate system" may refer to a coordinate system used by the display apparatus 100 to identify six-axis coordinate values of the user face. Here, the six-axis coordinate values may include three-axis coordinate values (x, y, z) representing the position and three-axis rotation values (yaw, pitch, roll) representing the direction. For example, the "reference coordinate system" may include a three-dimensional (3D) coordinate system defined while having one reference point among the plurality of reference points of the user as an origin.

Here, the "reference coordinate system" may be referred to by being replaced with various expressions representing the same or similar concept. For example, the "reference coordinate system" may be replaced with various terms such as a "reference system," a "standard coordinate system," a "world coordinate system," or a "reference frame." In the present disclosure, the expression "reference coordinate system" is used as a generic term.

At least one processor 130 may control overall operations of the display apparatus 100. Specifically, at least one processor 130 may be connected to the display 110 and the memory 120, and may control the overall operations of the display apparatus 100 by executing at least one instruction stored in the memory 120.

At least one processor 130 may be implemented as a digital signal processor (DSP) or a microprocessor for processing digital signals. However, the present disclosure is not limited thereto, and at least one processor 130 may include at least one of a central processing unit (CPU), a micro controller unit (MCU), a micro processing unit (MPU), a controller, an application processor (AP), a communication processor (CP), an advanced reduced instruction set computer (RISC) machines (ARM) processor, or an artificial intelligence (AI) processor, or may be defined by such terms. In addition, the processor 130 may be implemented as a system-on-chip (SoC) or a large scale integration (LSI) including a processing algorithm, or may be implemented as a field programmable gate array (FPGA). At least one processor 130 may perform various functions by executing computer executable instructions stored in the memory 120.

When a method according to various embodiments of the present disclosure includes a plurality of operations, the plurality of operations may be performed by a single processor or by a plurality of processors. At least one processor 130 may be implemented as a single-core processor including one core, or may be implemented as at least one multicore processor including multiple cores (e.g., homogeneous multicores or heterogeneous multicores). Hereinafter, for convenience of description, at least one processor 130 is referred to as the processor 130.

Upon obtaining a current image in which the face and shoulders of the user are identified, the processor 130 may track the plurality of reference points in the current image based on the information on the plurality of reference points.

Here, the "information on the plurality of reference points" may refer to information used by the display apparatus 100 to track the plurality of reference points in images continuously obtained. For example, the "information on the plurality of reference points" may include "coordinates of the plurality of reference points in an image of a previous frame" and "pixel values of pixels corresponding to the coordinates of the plurality of reference points in the image of the previous frame."

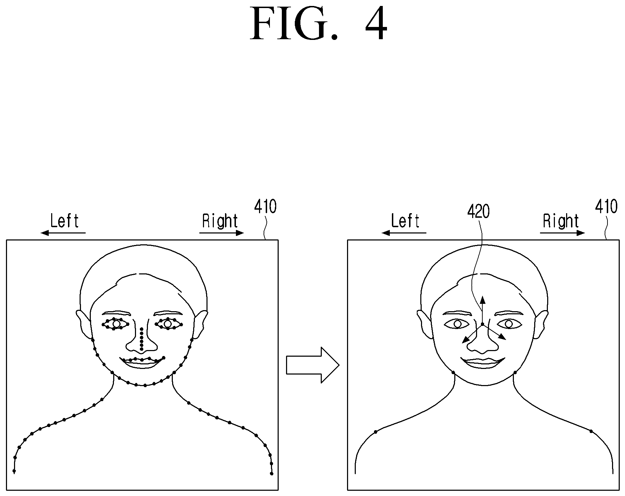

A specific method in which the display apparatus 100 tracks the plurality of reference points is described in detail below with reference to descriptions provided with reference to FIGS. 4 to 6.

By including the configurations illustrated in FIG. 2, the display apparatus 100 according to the present disclosure may identify the position and direction of the user face and may display a three-dimensional (3D) image corresponding to the identified position and direction of the user face. Specifically, the display apparatus 100 may track only the plurality of reference points based on the reference coordinate system identified in the initial image and may estimate the direction of the user face, thereby identifying the direction of the user face more quickly and accurately than a conventional face direction estimation method because it is unnecessary to identify a plurality of feature points (e.g., eyes, a nose, and a mouth) in each continuously obtained image.

However, the display apparatus 100 according to the present disclosure may further include various configurations in addition to the display 110 and the memory 120 illustrated in FIG. 2. Accordingly, the following descriptions provided with reference to FIG. 3 describe in detail various components that may be included in the display apparatus 100.

FIG. 3 is a detailed block diagram illustrating a configuration of the display apparatus according to at least one embodiment of the present disclosure.

Referring to FIG. 3, the display apparatus 100 may further include the display 110, the memory 120, the processor 130, the camera 140, and an interface 150.

The display 110 and the memory 120 that may be included in the display apparatus 100 are described in detail above with reference to FIG. 2, and descriptions overlapping with those provided with reference to FIG. 2 are thus omitted from the descriptions provided with reference to FIG. 3.

The camera 140 is a component for capturing the face and shoulders of the user.

For example, the camera 140 may be implemented as a stereo camera capable of simultaneously obtaining two images through two capturing lenses spaced apart from each other by a predetermined distance. When the camera 140 is implemented as the stereo camera, the display apparatus 100 may obtain depth information of an object commonly included in the two images based on a triangulation method applied to the two images.

In another example, the camera 140 may be implemented as a red, green, blue and depth (RGB-D) camera. When the camera is implemented as the RGB-D camera, the display apparatus 100 may obtain depth information of an object included in an image based on an image obtained through the RGB-D camera.

The description of the camera 140 provided above is merely an example, and the camera 140 may be implemented as various cameras capable of obtaining depth information of an object, such as two or more red, green, blue (RGB) cameras and/or RGB-D cameras.

The interface 150 may include a communication interface, a manipulation interface, an input/output interface, or the like. For example, the communication interface is a component for performing communication with at least one external device. The communication interface may include at least one wireless communication module or at least one wired communication module. Each communication module may be implemented as at least one hardware chip. The wireless communication module may include at least one of a Wi-Fi module, a Bluetooth module, an infrared communication module, or another communication module. In addition, the communication interface may include at least one communication chip that performs communication according to various wireless communication standards such as ZigBee, third generation (3G), third generation partnership project (3GPP), long term evolution (LTE), LTE advanced (LTE-A), fourth generation (4G), or fifth generation (5G). The wired communication module may include, for example, at least one of a local area network (LAN) module, an Ethernet module, a pair cable, a coaxial cable, an optical fiber cable, or an ultra wide-band (UWB) module. As described above, the communication interface may be implemented in various forms to perform communication with an external device, thereby receiving an image in which the face and shoulders of the user are captured from the external device.

The manipulation interface is a component for receiving a user manipulation input. The manipulation interface may include various buttons disposed on a body of the display apparatus 100, a touch screen, or the like.

The input/output interface is a component for inputting and outputting various external signals. The input/output interface may be connected to various external memories or external sources (e.g., a web server or a user terminal device) to receive various data. The input/output interface may be implemented as at least one of a high definition multimedia interface (HDMI), a mobile high-definition link (MHL), a universal serial bus (USB), a USB C-type, a DisplayPort (DP), a Thunderbolt, a video graphics array (VGA) port, an RGB port, a D-subminiature (D-SUB), or a digital visual interface (DVI). At least a portion of the input/output interface may be connected to the communication interface. For example, the input/output interface may transmit information received from an external device to the communication interface or may transmit information received through the communication interface to an external device.

The interface 150 may be connected to a camera or an external device including a camera.

For example, when a camera is connected thereto through a USB port among the interfaces 150, the display apparatus 100 may obtain an image capturing the user through the camera.

Specifically, the camera may capture an image incident at a time of capturing the user by using an image sensor and may store the captured image data. The display apparatus 100 may obtain an image corresponding to the user based on the captured image data, and may identify and/or track the plurality of reference points based on the image corresponding to the user.

The description provided above describes a case in which an external camera is connected to the display apparatus 100 through the interface 150. However, according to an embodiment, the display apparatus 100 may include a built-in camera.

Components illustrated in FIGS. 2 and 3 are merely examples, and in implementing the present disclosure, new components may be added in addition to the components illustrated in FIGS. 2 and 3 or some components may be omitted therefrom.

The following descriptions provided with reference to FIGS. 4 to 6 describe a specific method in which the display apparatus 100 identifies the position and direction of the user face.

FIG. 4 is a diagram illustrating a method in which the display apparatus sets the reference coordinate system according to at least one embodiment of the present disclosure.

Referring to FIG. 4, the display apparatus 100 may identify a reference coordinate system 420 and a plurality of reference points in an initial image 410.

Upon obtaining the initial image 410 in which the face and shoulders of the user are identified, the display apparatus 100 may identify a plurality of feature points in the initial image 410, and the display apparatus 100 may identify the plurality of reference points in the initial image 410 based on positions of the plurality of feature points.

According to an embodiment, the plurality of feature points may include a plurality of points corresponding to the eyes, nose, lips, jawline, and shoulder line of the user. In this case, upon obtaining the initial image 410, the display apparatus 100 may detect presence of the face and shoulders of the user in the initial image 410, may extract feature points corresponding to the positions of eyes, nose, lips, and jawline included in the user face, and may extract feature points corresponding to positions of the shoulder line included in the user shoulders.

Specifically, the display apparatus 100 may identify a plurality of feature points corresponding to positions of the face and shoulders of the user in an image by using various methods such as a convolutional neural network (CNN), a Haar cascade, or a histogram of oriented gradients (HOG).

According to an embodiment, the display apparatus 100 may identify the plurality of feature points corresponding to the positions of the face and shoulders of the user by using the Haar cascade method. In this case, the display apparatus 100 may use pre-trained classifiers to identify the feature points such as the eyes, nose, and lips of the user. The classifiers used in the Haar cascade method may be classifiers trained to classify the feature points based on differences between pixel values of adjacent pixels.

When the display apparatus 100 identifies the plurality of feature points corresponding to the positions of the face and shoulders of the user from the initial image 410, the display apparatus 100 may identify the plurality of reference points in the initial image 410 based on the positions of the plurality of feature points.

According to an embodiment, the display apparatus 100 may identify a shape of the face and shoulders of the user based on the positions of the plurality of feature points, and may identify a point corresponding to the central point of the user face as a first reference point. The display apparatus 100 may identify a point corresponding to the left shoulder of the user as a second reference point, and may identify a point corresponding to the right shoulder of the user as a third reference point. The display apparatus 100 may also identify a point corresponding to a left jaw point of the user as a fourth reference point, and may identify a point corresponding to a right jaw point of the user as a fifth reference point.

According to the description provided above, the display apparatus 100 may identify the points corresponding to the central point of the user face, the left and right jaw points, and the left and right shoulders as the plurality of reference points. However, this configuration is merely an example, and the display apparatus 100 may identify any point included in the user face as the reference point, or may identify any one of points included in the face and shoulders of the user as the reference point. In the present disclosure, for convenience of description, the first reference point refers to the point corresponding to the central point of the user face, the second reference point refers to the point corresponding to the left shoulder of the user, the third reference point refers to the point corresponding to the right shoulder of the user, the fourth reference point refers to the point corresponding to the left jaw point of the user, and the fifth reference point refers to the point corresponding to the right jaw point of the user.

When the plurality of reference points corresponding to the positions of the face and shoulders of the user are identified, the display apparatus 100 may identify the reference coordinate system 420 having the first reference point as the origin in the initial image 410 based on positional relationships among the plurality of reference points in the initial image 410. In addition, the display apparatus 100 may store information on the reference coordinate system 420 in the memory 120.

According to an embodiment, the display apparatus 100 may convert respective coordinates of pixels corresponding to the first reference point, the second reference point, and the third reference point included in an image into coordinate values in a global coordinate system having an arbitrary point in a space as the origin, based on extrinsic parameters and depth information of the camera. After the display apparatus 100 obtains coordinate values of the first reference point, the second reference point, and the third reference point in the global coordinate system, the display apparatus 100 may generate a new coordinate system based on the coordinate values of the first reference point, the second reference point, and the third reference point, and may define the new coordinate system as the reference coordinate system 420.

According to an embodiment, the display apparatus 100 may define a plane corresponding to a shape of the user face and may set a normal vector of the plane corresponding to the shape of the user face as a coordinate axis of the reference coordinate system 420. Specifically, the display apparatus 100 may define a plane including a first vector connecting the first reference point to the second reference point and a second vector connecting the first reference point to the third reference point, and may generate the normal vector of the plane based on a cross product of the first vector and the second vector. In this case, the display apparatus 100 may set the normal vector generated through the cross product as the coordinate axis of the reference coordinate system 420.

According to another embodiment, the display apparatus 100 may convert coordinates of pixels corresponding to the first reference point, the fourth reference point, and the fifth reference point included in an image into coordinate values in a global coordinate system. After obtaining coordinate values of the first reference point, the fourth reference point, and the fifth reference point in the global coordinate system, the display apparatus 100 may generate a new coordinate system based on the coordinate values of the first reference point, the fourth reference point, and the fifth reference point, and may define the new coordinate system as the reference coordinate system 420. In this embodiment as well, the display apparatus 100 may define a plane including a first vector connecting the first reference point to the fourth reference point and a second vector connecting the first reference point to the fifth reference point as a plane corresponding to the user face, and may set a normal vector of the defined plane as the coordinate axis of the reference coordinate system 420.

The description provided above describes only an embodiment in which the display apparatus 100 defines the plane corresponding to the user face and generates the reference coordinate system 420 based on three reference points. However, the display apparatus 100 may generate the reference coordinate system 420 based on three or more reference points.

In addition, the description provided above describes that the display apparatus 100 may generate the reference coordinate system 420 based only on the positions of reference points. However, this configuration is merely an example, and the display apparatus 100 may also set the reference coordinate system based on a plurality of feature points. For example, the display apparatus 100 may generate the reference coordinate system 420 after defining the plane corresponding to the user face based on the positions of the plurality of feature points corresponding to the jawline of the user.

After the display apparatus 100 identifies the plurality of reference points and the reference coordinate system 420 in the initial image 410, the display apparatus 100 may store the information on the plurality of reference points and the information on the reference coordinate system in the memory 120.

Here, the "information on the reference coordinate system" may refer to information on the position of an origin of the reference coordinate system and the directions of an x-axis, a y-axis, and a z-axis. For example, the "information on the reference coordinate system" may include position information of a pixel corresponding to the position of the origin of the reference coordinate system and direction information of unit vectors of respective coordinate axes.

The display apparatus 100 according to the present disclosure may identify the position and direction of the user face in continuously obtained images based on the reference coordinate system 420 defined in the initial image 410 by using the above-described method, thereby identifying the direction of the user face more quickly and accurately than a conventional user face direction estimation method.

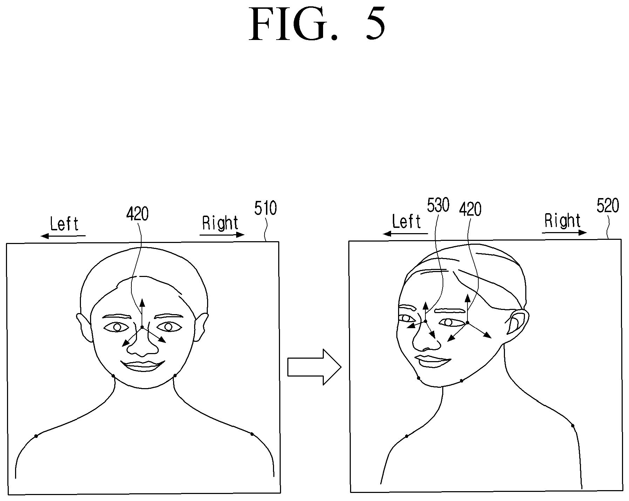

The following descriptions provided with reference to FIG. 5 describe a method in which the display apparatus 100 tracks the plurality of reference points.

FIG. 5 is a diagram illustrating a method in which the display apparatus identifies the user face direction according to at least one embodiment of the present disclosure.

Referring to FIG. 5, upon obtaining a current image 520 in which the face and shoulders of the user are identified, the display apparatus 100 may track the plurality of reference points in the current image based on the information on the plurality of reference points, and may identify the user face direction based on the tracked coordinates of the plurality of reference points.

According to an embodiment, the display apparatus 100 may track the plurality of reference points by using a method of tracking movement of pixels based on an optical flow, such as a Lucas-Kanade algorithm. In addition, the display apparatus 100 may track the plurality of reference points based on deep learning models such as FlowNet or LightFlowNet, and methods for tracking the plurality of reference points are not limited to the above-described methods.

Specifically, the display apparatus 100 may set a plurality of windows including pixels corresponding to coordinates of each of the plurality of reference points and neighboring pixels, based on coordinates of the plurality of reference points in an image 510 of a previous frame. The display apparatus 100 may estimate a movement vector of each window in the current image 520 based on pixel values of pixels corresponding to coordinates of the plurality of reference points in the image 510 of the previous frame and pixel values of neighboring pixels included in the window. In this case, the display apparatus 100 may use an assumption that movements of all pixels included in the window are uniform to estimate the movement vector. The display apparatus 100 may track the plurality of reference points in the current image based on the estimated movement vector of the window.

The display apparatus 100 may identify coordinates of the plurality of reference points in the current image 520 with respect to the reference coordinate system 420 based on the information on the reference coordinate system 420 defined in the initial image. According to an embodiment, the display apparatus 100 may identify coordinates of the first, second, third, fourth, and fifth reference points in the reference coordinate system 420.

The display apparatus 100 may identify the plane corresponding to the user face based on the coordinates of the first, second, third, fourth, and fifth reference points in the reference coordinate system 420, and may generate an object coordinate system 530 having the plane corresponding to the user face as one coordinate plane and having the first reference point in the current image as the origin, by using the same method as the method in which the reference coordinate system 420 is defined in the initial image.

The display apparatus 100 may identify an angle of the user face direction by comparing coordinate axes of the reference coordinate system 420 and coordinate axes of the object coordinate system 530. For example, the display apparatus 100 may identify the angle of the user face direction by identifying an amount of rotation of an x-axis of the object coordinate system 530 in a clockwise or counterclockwise direction relative to an x-axis of the reference coordinate system 420. Specifically, the display apparatus 100 may calculate a rotation angle by which the coordinate axes of the object coordinate system 530 are rotated relative to the coordinate axes of the reference coordinate system 420 as yaw, roll, and pitch values.

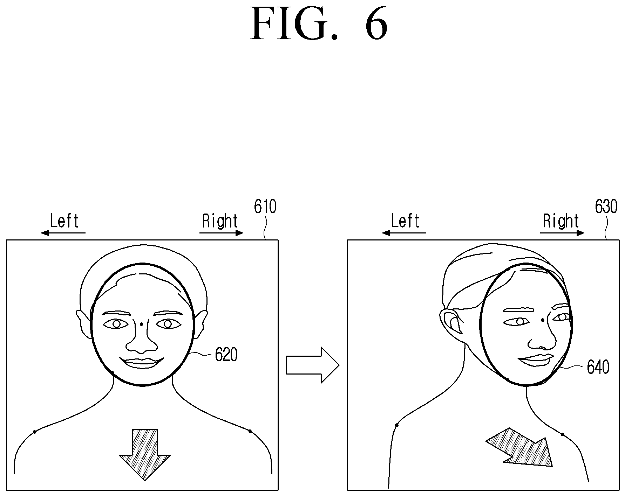

The description provided above describes only a method in which the display apparatus 100 generates the object coordinate system 530 based on the coordinates of the plurality of reference points and identifies the direction and position of the user face by comparing the object coordinate system 530 with the reference coordinate system 420. However, this configuration is merely an example, and the display apparatus 100 may identify a circle corresponding to the user face based on the coordinates of the plurality of reference points and may identify the user face direction based on the identified circle. The following descriptions provided with reference to FIG. 6 describe a method of identifying the user face direction by identifying the circle corresponding to the user face based on the coordinates of the plurality of reference point.

FIG. 6 is a diagram illustrating a method in which the display apparatus identifies the user face direction according to at least one embodiment of the present disclosure.

Referring to FIG. 6, the display apparatus 100 may identify circles 620 and 640 corresponding to the user face.

The display apparatus 100 may identify the circle corresponding to the user face based on coordinates of the plurality of reference points identified in the current image, and may identify the user face direction by identifying a position of the circle with respect to the reference coordinate system based on the information on the reference coordinate system.

According to an embodiment, the display apparatus 100 may track the first reference point, the second reference point, and the third reference point in the current image based on the information on the plurality of reference points, and may identify an upper body direction of the user by identifying coordinates of the second and third reference points with respect to the reference coordinate system based on the information on the reference coordinate system.

Specifically, the display apparatus 100 may identify the upper body direction of the user based on a distance between the second reference point and the third reference point in the current image and changes in coordinate values of the second reference point and the third reference point. For example, the display apparatus 100 may compare the distance between the second reference point and the third reference point in the current image with a distance between the second reference point and the third reference point in the initial image capturing a front-facing view of the user, and may identify that the upper body is rotated more as the distance between the second reference point and the third reference point in the current image is shorter. The display apparatus 100 may identify that the upper body faces the front surface when the distance between the second reference point and the third reference point in the current image is equal to the distance between the second reference point and the third reference point in the initial image.

In addition, the display apparatus 100 may identify that the upper body direction of the user is toward the right when the position of the second reference point moves to the right, and may identify that the upper body direction of the user is toward the left when the position of the third reference point moves to the left.

As described above, the display apparatus 100 may identify the upper body direction of the user by comparing the coordinates of the second and third reference points identified in the initial image capturing the front-facing view of the user with the coordinates of the second and third reference points identified in the current image. The display apparatus 100 may identify the circle corresponding to the user face based on the identified upper body direction of the user by using the above-described method.

The display apparatus 100 may identify the circle corresponding to the user face based on the upper body direction of the user and the coordinates of the first reference point with respect to the reference coordinate system.

According to an embodiment, the display apparatus 100 may identify a circle having the first reference point as a center of the circle and having a diameter corresponding to a size of the user face in the initial image and an eccentricity corresponding to a shape of the user face, based on a plurality of feature points identified in the initial image. The display apparatus 100 may identify the circle corresponding to the user face included in each of continuously obtained images by changing only a position of the circle in the continuously obtained images without changing the diameter and eccentricity of the circle identified in the initial image.

Specifically, the display apparatus 100 may identify a first circle 620 corresponding to the user face included in a first frame image 610. In the first frame image 610, the user may face a front direction, and accordingly, a position of the first reference point may be a central point of the image, and the upper body direction of the user may also face the front direction. Accordingly, the display apparatus 100 may generate the first circle 620 having a normal vector facing the front direction.

In addition, the display apparatus 100 may identify a second circle 640 corresponding to the user face included in a second frame image 630. In the second frame image 630, the user may face a right direction, and accordingly, a position of the first reference point may be moved to the right, and the upper body direction of the user may also face the right. Accordingly, the display apparatus 100 may generate the second circle 640 facing the right direction based on the upper body direction of the user and the coordinates of the first reference point. A plane including the second circle 640 may have a normal vector facing the right direction.

The display apparatus 100 may estimate an angle of the upper body direction of the user and may identify that the angle of the user face direction is within a predetermined angular range from the estimated angle of the upper body direction of the user. Here, the predetermined angular range may be set to various angular ranges by the user or manufacturer of the display apparatus. For example, the predetermined angular range may be set to ±10 degrees.

Here, the first circle 620 and the second circle 640 may be circles having the same diameter and eccentricity. That is, the display apparatus 100 may change only the position of a circle having the fixed diameter and eccentricity based on the upper body direction of the user and the coordinates of the first reference point.

According to another embodiment, the display apparatus 100 may track the first reference point, the second reference point, the third reference point, the fourth reference point, and the fifth reference point based on the information on the plurality of reference points, and may identify the circle corresponding to the user face based on the upper body direction of the user and the coordinates of the first, fourth, and fifth reference points with respect to the reference coordinate system. In this case, a total of the five reference points may be used to identify the circle corresponding to the user face, and the display apparatus 100 may thus identify the circle corresponding to the user face more accurately than a method of identifying the circle corresponding to the user face based on three reference points.

Specifically, the display apparatus 100 may identify the circle corresponding to the user face as a circle having the first reference point as the center and having the fourth reference point and the fifth reference point as points present on a circumference of the circle, in continuously obtained images.

The description provided above describes only a case in which the circle corresponding to the user face is identified. However, this configuration is merely an example, and the display apparatus 100 may also identify various shapes such as a rectangle, a pentagon, or a hexagon corresponding to a shape of the user face.

In addition, the description provided above describes that three reference points and five reference points may be used to identify the circle corresponding to the user face. However, the display apparatus 100 may also more accurately identify the circle corresponding to the user face based on a larger number of reference points.

When the display apparatus 100 identifies the circle corresponding to the user face by using the above-described method, the display apparatus 100 may identify the user face direction by identifying the position of the circle based on the information on the reference coordinate system.

According to an embodiment, the display apparatus 100 may identify a normal vector of the circle corresponding to the user face in the reference coordinate system, and may identify an angle of the normal vector with respect to each of an xy plane, a yz plane, and a zx plane of the reference coordinate system, thereby calculating the yaw, pitch, and roll values, and may identify the calculated yaw, pitch, and roll values as the angle of the user face direction with respect to the reference coordinate system.

According to an embodiment, the display apparatus 100 may also identify the user face direction by comparing the position of a circle corresponding to a front-facing face of the user that is identified in the initial image with the position of a circle corresponding to the user face identified in the current image. The display apparatus 100 may calculate the yaw, pitch, and roll values by identifying an amount of rotation of the circle corresponding to the user face identified in the current image relative to the circle corresponding to the front-facing face of the user, and may identify the calculated yaw, pitch, and roll values as the angle of the user face direction with respect to the reference coordinate system.

While fixing the reference coordinate system defined in the initial image, the display apparatus 100 may identify only the coordinates of the plurality of reference points in the reference coordinate system by tracking only the plurality of reference points in continuously obtained images, thereby identifying the circle corresponding to the user face, and may quickly and accurately identify the user face direction based on the position of the identified circle. In addition, unlike a conventional method of identifying the user face direction, the display apparatus 100 may also identify the upper body direction of the user and identify the user face direction in consideration of the upper body direction of the user, thereby identifying the user face direction more accurately than the conventional method.

The display apparatus 100 may update the information on the plurality of reference points and the information on the reference coordinate system identified in the initial image.

According to an embodiment, upon the plurality of reference points not being tracked in images obtained for a predetermined number of frames, the display apparatus 100 may delete the information on the reference coordinate system and the information on the plurality of reference points from the memory 120.

When the plurality of reference points are not continuously tracked in the images obtained for the predetermined number of frames, the display apparatus 100 may determine that the user face direction is not capable of being tracked based on the information on the reference coordinate system and the information on the plurality of reference points stored in the memory 120, and may perform an operation for updating the information on the reference coordinate system and the information on the plurality of reference points.

According to an embodiment, the display apparatus 100 may identify, as the initial image, an image in which the face and shoulders of the user are identified among the images obtained after the predetermined number of frames, and may identify the plurality of reference points and the reference coordinate system in the initial image and store the information on the identified plurality of reference points and information on the identified reference coordinate system in the memory 120.

Specifically, the display apparatus 100 may identify, as the initial image, an image in which appearances of the front-facing face and upper body of the user are identified among images obtained after the predetermined number of frames. The display apparatus 100 may identify a plurality of feature points in the front-facing face and upper body of the user, and may identify the plurality of reference points in the initial image based on the positions of the identified plurality of feature points. The description provided above describes in detail a method in which the display apparatus 100 identifies the plurality of reference points in the initial image and identifies the reference coordinate system based on the identified plurality of reference points, and a description thereof is thus omitted.

In addition, the predetermined number of frames may be set to an arbitrary number of frames (e.g., 60 frames) by the manufacturer or user of the display apparatus 100.

According to an embodiment, the display apparatus 100 may delete the information on the reference coordinate system and the information on the plurality of reference points from the memory 120 at each interval of the predetermined number of frames, and may identify, as an initial image, an image in which the face and shoulders of the user are identified among the images obtained after the predetermined number of frames. The display apparatus 100 may identify the user face direction more accurately by updating the information on the reference coordinate system at each interval of the predetermined number of frames even when the plurality of reference points are tracked in continuously obtained images.

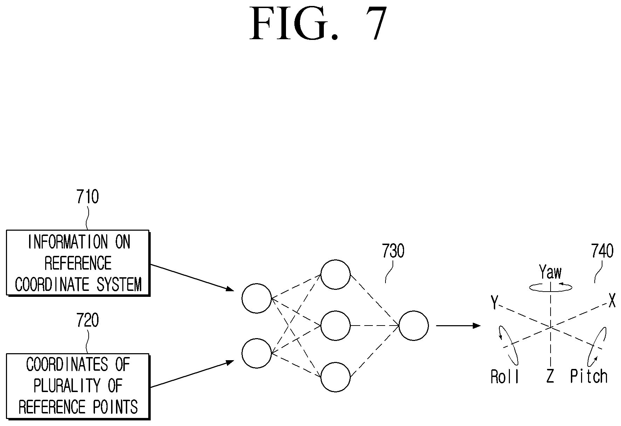

As described above, the display apparatus 100 may identify a plurality of feature points (e.g., the eyes, nose, mouth, or shoulder line of the user) only in the initial image, and may identify the user face direction quickly and accurately by tracking only the plurality of reference points without identifying the plurality of feature points in the images obtained after the initial image. The display apparatus 100 according to the present disclosure may also implement the above-described method of identifying the user face direction based on a trained neural network model. The following descriptions provided with reference to FIG. 7 describe a method of identifying the user face direction based on the trained neural network model.

FIG. 7 is a diagram illustrating a method of identifying the user face direction based on a neural network model according to at least one embodiment of the present disclosure.

Referring to FIG. 7, the display apparatus 100 may output an angle of the user face direction obtained by inputting information 710 on the reference coordinate system and coordinates 720 of the plurality of reference points to a neural network model 730.

The neural network model 730 may be a neural network model trained to receive the information 710 on the reference coordinate system and the coordinates 720 of the plurality of reference points with respect to the reference coordinate system, to identify the circle corresponding to the user face based on the coordinates of the plurality of reference points, and to output an angle of the user face direction based on a position of the identified circle with respect to the reference coordinate system.

According to an embodiment, the neural network model 730 may be trained using, as training data, the coordinates of the plurality of reference points and the circle corresponding to the user face generated based on the coordinates of the plurality of reference points. Specifically, the coordinates of the plurality of reference points included in the training data may be input data, and the circle corresponding to the user face generated based on the coordinates of the plurality of reference points included in the training data may be target data.

A loss function of the neural network model 730 may be implemented as a function that measures a difference between "a circle inferred by the neural network model 730 from the input data" and "the circle corresponding to the user face given to the neural network model 730 as the target data." In this case, the neural network model 730 may be trained to minimize the loss function. Specifically, the neural network model 730 may be trained to include parameters for minimizing the loss function by using a gradient descent method or the like.

According to an embodiment, the neural network model 730 may be trained to identify a position of a circle estimated in the reference coordinate system from the coordinates of the plurality of reference points, and to output an angle of the user face direction (the yaw, pitch, or roll value, 740) based on the identified position of the circle.

The neural network model 730 described above may be a neural network model including various neural network structures such as a convolutional neural network (CNN), a deep neural network (DNN), a recurrent neural network (RNN), a restricted Boltzmann machine (RBM), a deep belief network (DBN), a bidirectional recurrent deep neural network (BRDNN), a long short term memory (LSTM), or a deep Q-network.

The neural network model 730 described above may be stored in the memory 120. In addition, the neural network model 730 may be stored in an external server device. In this case, the display apparatus 100 may transmit the information on the reference coordinate system and the information on the plurality of reference points to the external server device, and the external server device may input the received information on the reference coordinate system and the received information on the plurality of reference points into the neural network model 730, and may transmit the output angle of the user face direction to the display apparatus 100.

The method of identifying a user face direction described above with reference to FIGS. 4 to 7 may be applied to various electronic apparatuses capable of obtaining an image in which the face and shoulders of the user are identified.

For example, the method of identifying a user face direction according to the present disclosure may be used for an electronic apparatus for identifying a state of a driver in a vehicle. Specifically, when images capturing the driver in the vehicle are continuously obtained, and when a driver face direction is continuously toward a downward direction for frames exceeding a predetermined number of frames, the electronic apparatus for identifying the driver state may detect drowsy driving and may output a warning sound to the driver. In another example, when the driver face direction is not continuously toward a front for frames exceeding the predetermined number of frames, the electronic apparatus may output a warning sound to the driver to gaze at the front.

In another example, the method of identifying a user face direction according to the present disclosure may be used for human robot interaction (HRI). Specifically, when images capturing the user are continuously obtained, a robot may provide information on an object at which the user gazes by identifying the user face direction, or may provide a user interface (UI) for controlling an electronic apparatus at which the user gazes. For example, when the user gazes at an air conditioner, the robot may provide a UI to the user to turn on or off power of the air conditioner or to change the set temperature or operation type of the air conditioner. In another example, when the user face direction is toward the robot, the robot may start a conversation with the user.

In another example, the method of identifying a user face direction according to the present disclosure may also be used for an electronic apparatus for evaluating a user concentration level. In this case, when images capturing the user are continuously obtained, the electronic apparatus may identify the user face direction and may evaluate the user concentration level by recording and storing a duration for which the user gazes at a display or a book.

In another example, the method of identifying a user face direction according to the present disclosure may be used in various fields, such as being used for an electronic apparatus for identifying a head direction of an athlete in sports.

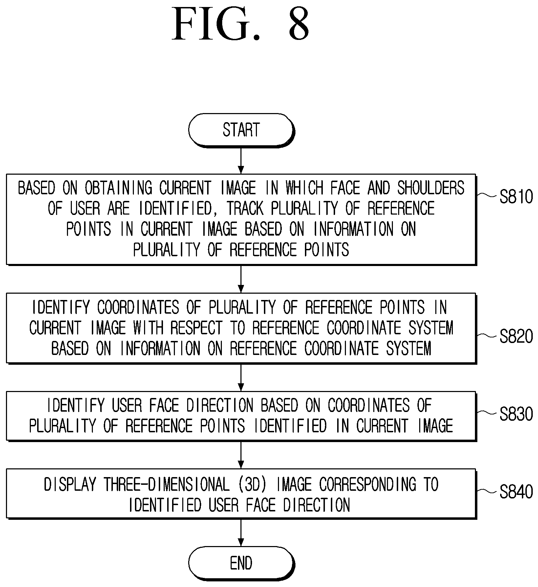

FIG. 8 is a flowchart illustrating a method in which the display apparatus displays a three-dimensional (3D) image according to at least one embodiment of the present disclosure.

Referring to FIG. 8, upon obtaining the current image in which the face and shoulders of the user are identified, the display apparatus 100 may track the plurality of reference points in the current image based on the information on the plurality of reference points (S810).

Here, the display apparatus 100 may identify movement of the plurality of reference points based on the coordinates of the plurality of reference points in the image of the previous frame and the pixel values of the pixels corresponding to the coordinates of the plurality of reference points in the image of the previous frame, and may track the plurality of reference points in the current image based on the identified movement.

According to an embodiment, the plurality of reference points may include the first reference point, the second reference point, the third reference point, the fourth reference point, and the fifth reference point. In this case, the first reference point may be the point corresponding to the central point of the user face, the second reference point may be the point corresponding to the left shoulder of the user, the third reference point may be the point corresponding to the right shoulder of the user, the fourth reference point may be the point corresponding to the left jaw of the user, and the fifth reference point may be the point corresponding to the right jaw of the user.

Subsequently, the display apparatus 100 may identify the coordinates of the plurality of reference points in the current image with respect to the reference coordinate system based on the information on the reference coordinate system (S820).

Subsequently, the display apparatus 100 may identify the user face direction based on the coordinates of the plurality of reference points identified in the current image (S830).

According to an embodiment, the display apparatus 100 may identify the circle corresponding to the user face based on the coordinates of the plurality of reference points identified in the current image, and may identify the user face direction by identifying the position of the circle with respect to the reference coordinate system based on the information on the reference coordinate system.

According to an embodiment, the display apparatus 100 may identify the upper body direction of the user by identifying the coordinates of the second and third reference points with respect to the reference coordinate system based on the information on the reference coordinate system, and may identify the circle corresponding to the user face based on the upper body direction of the user and the coordinates of the first reference point with respect to the reference coordinate system, and may then identify the user face direction by identifying the position of the circle with respect to the reference coordinate system.

According to an embodiment, the display apparatus 100 may identify the circle corresponding to the user face based on the upper body direction of the user and the coordinates of the first, fourth, and fifth reference points with respect to the reference coordinate system, and may then identify the user face direction by identifying the position of the circle with respect to the reference coordinate system.

According to an embodiment, the display apparatus 100 may identify the user face direction based on an output angle of the user face direction obtained by inputting the coordinates of the plurality of reference points in the current image and the information on the reference coordinate system into the neural network model.

Subsequently, the display apparatus 100 may display the three-dimensional (3D) image corresponding to the identified user face direction (S840).

By using the above-described method, the display apparatus 100 may identify the user face direction quickly and accurately and may display the 3D image corresponding to the identified user face direction, thereby providing the user with an optimal 3D image.

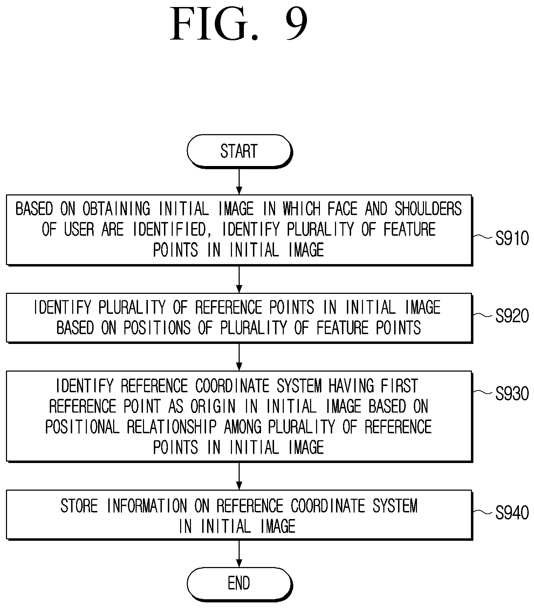

FIG. 9 is a flowchart illustrating a method in which the display apparatus stores the information on the reference coordinate system according to at least one embodiment of the present disclosure.

Referring to FIG. 9, upon obtaining the initial image in which the face and shoulders of the user are identified, the display apparatus 100 may identify the plurality of feature points in the initial image (S910).

Here, the plurality of feature points may include the plurality of characteristic points used to recognize the face and shoulders of the user. For example, the plurality of feature points may include the points corresponding to the eyes, the nose, the mouth, and the jaw line included in the user face, and the points corresponding to the corner points and edges of the user shoulders.

Subsequently, the display apparatus 100 may identify the plurality of reference points in the initial image based on the positions of the plurality of feature points (S920).

Subsequently, the display apparatus 100 may identify the reference coordinate system having the first reference point as the origin in the initial image based on the positional relationship among the plurality of reference points in the initial image (S930).

Subsequently, the display apparatus 100 may store the information on the reference coordinate system in the initial image (S940).

According to an embodiment, upon the plurality of reference points not being tracked in the images obtained for the predetermined number of frames, the display apparatus 100 may delete the information on the reference coordinate system and the information on the plurality of reference points. In this case, the display apparatus 100 may identify, as an initial image, the image in which the face and shoulders of the user are identified among the images obtained after the predetermined number of frames, and may identify the plurality of reference points and the reference coordinate system in the initial image and store information on the identified plurality of reference points and the information on the identified reference coordinate system.

According to an embodiment, the display apparatus 100 may delete the information on the reference coordinate system and the information on the plurality of reference points at each interval of the predetermined number of frames. In this case, the display apparatus 100 may identify, as an initial image, the image in which the face and shoulders of the user are identified among the images obtained after the predetermined number of frames, may identify the plurality of reference points and the reference coordinate system in the initial image, and may store information on the identified plurality of reference points and the information on the identified reference coordinate system.

According to the above-described method, the display apparatus 100 may store the information on the reference coordinate system defined in the initial image and identify the user face direction in the continuously obtained images based on the information on the reference coordinate system, thereby identifying the user face direction more quickly than the conventional method.

The various methods described with reference to FIGS. 8 and 9 may be performed by a display apparatus having the configurations illustrated in FIGS. 2 and 3. However, the various methods are not necessarily limited thereto, and may also be performed by an electronic apparatus having various configurations.

Meanwhile, FIGS. 8 and 9 illustrate that the sequence of all the steps is mapped for convenience of description. However, the sequence of steps is not necessarily limited to this sequence, such as steps that are unrelated to the sequence or steps that are capable of being performed in parallel.

Meanwhile, the methods according to at least some of the various embodiments of the present disclosure described above may be implemented in the form of an application capable of being installed on an existing electronic apparatus.

In addition, the methods according to at least some of the various embodiments of the present disclosure described above may be implemented only by software upgrade or hardware upgrade of the existing electronic apparatus.

In addition, the methods according to at least some of the various embodiments of the present disclosure described above may also be performed through an embedded server included in the electronic apparatus, or through an external server of at least one of the electronic apparatus.

Meanwhile, according to an embodiment of the present disclosure, the various embodiments described above may be implemented by software including an instruction stored on a machine-readable storage medium, the instructions being readable by a machine (e.g., a computer). The machine may be a device that invokes the stored instruction from a storage medium, may be operated based on the invoked instruction, and may include the display apparatus according to the disclosed embodiments (e.g., a display apparatus A). When the instruction is executed by the processor, the processor may directly perform, or perform functions corresponding to the instructions by using other components under control of the processor. The instruction may include codes generated or executed by a compiler or an interpreter. The machine-readable storage medium may be provided in the form of a non-transitory storage medium. Here, the term "non-transitory storage medium" means a tangible device and does not include a signal (e.g., an electromagnetic wave), and this term does not distinguish a case in which data is stored semi-permanently in the storage medium and a case in which data is temporarily stored. For example, the "non-transitory storage medium" may include a buffer in which data is temporarily stored. According to an embodiment, the methods according to the various embodiments of the present disclosure may be provided as a computer program product. The computer program product may be traded as a product between a seller and a buyer. The computer program product may be distributed in a form of a machine-readable storage medium (e.g., a compact disc read only memory (CD-ROM)), or may be distributed online (e.g., by download or upload) via an application store (e.g., Play Store^{™}) or directly between two user devices (e.g., smartphones). In the case of online distribution, at least a part of the computer program product (e.g., a downloadable application) may be at least temporarily stored or temporarily generated in a machine-readable storage medium such as a memory of a manufacturer server, an application store server, or a relay server.

The methods according to the various embodiments of the present disclosure may be implemented by software including instructions stored in a machine-readable storage medium, the instructions being readable by a machine (e.g., a computer). The machine may be a device that invokes the stored instruction from a storage medium, may be operated based on the invoked instruction, and may include the electronic apparatus (e.g., the display apparatus 100) according to the disclosed embodiments.

When the instructions described above are executed by the processor, the processor may perform functions corresponding to the instructions directly or by using other components under control of the processor. The instructions may include code generated or executed by a compiler or an interpreter.

Although the preferred embodiments of the present disclosure have been illustrated and described above, the present disclosure is not limited to the above-described specific embodiments, and various modifications may be made by those skilled in the art to which the present disclosure pertains without departing from the gist of the present disclosure as claimed in the claims, and such modifications should also be understood to fall within the spirit or scope of the present disclosure.

## Claims

1. A display apparatus comprising:
a memory to store information associated with a reference coordinate system defined with respect to an image and information associated with a plurality of reference points with respect to the image including coordinates of the plurality of reference points in the image having a frame and pixel values of pixels corresponding to the coordinates of the plurality of reference points that are in the frame of the image;
a display; and
at least one processor configured to control the display to display a three-dimensional (3D) image in association with a direction of a face of a user,
wherein the at least one processor is configured to:
based on obtaining a current image in which the face and shoulders of the user are identified, track the plurality of reference points in the current image based on the information associated with the plurality of reference points,
identify coordinates of the plurality of reference points in the current image with respect to the reference coordinate system based on the information associated with the reference coordinate system stored in association with the image, and
identify the direction of the face of the user based on the coordinates of the plurality of reference points identified in the current image,
wherein the plurality of reference points include a reference point corresponding to a position of the face of the user and reference points corresponding to positions of the shoulders of the user.

2. The display apparatus as claimed in claim 1,
wherein the plurality of reference points include a first reference point corresponding to a central point of the face of the user, and
wherein the at least one processor is configured to:
based on obtaining an initial image in which the face and the shoulders of the user are identified, identify a plurality of feature points in the initial image,
identify the plurality of reference points in the initial image based on positions of the plurality of feature points, and
identify the reference coordinate system having the first reference point as an origin in the initial image based on a positional relationship among the plurality of reference points in the initial image and store the information associated with the reference coordinate system in the memory,
wherein the plurality of feature points include a plurality of points used to recognize the face and the shoulders of the user.

3. The display apparatus as claimed in claim 1, wherein the at least one processor is configured to:
identify a circle corresponding to the face of the user based on the coordinates of the plurality of reference points identified in the current image, and
identify the face of the user direction by identifying a position of the circle with respect to the reference coordinate system based on the information associated with the reference coordinate system.

4. The display apparatus as claimed in claim 1, wherein the plurality of reference points include a first reference point, a second reference point, and a third reference point,
the first reference point being a point corresponding to a central point of the face of the user,
the second reference point being a point corresponding to a left shoulder of the user, and
the third reference point being a point corresponding to a right shoulder of the user, and
wherein the at least one processor is configured to:
based on obtaining the current image, track the first reference point, the second reference point, and the third reference point in the current image based on the information associated with the plurality of reference points,
identify an upper body direction of the user by identifying coordinates of the second reference point and the third reference point with respect to the reference coordinate system based on the information associated with the reference coordinate system,
identify a circle corresponding to the face of the user based on the upper body direction of the user and coordinates of the first reference point with respect to the reference coordinate system, and
identify the direction of the face of the user by identifying a position of the circle with respect to the reference coordinate system.

5. The display apparatus as claimed in claim 4, wherein the plurality of reference points further include a fourth reference point and a fifth reference point,
the fourth reference point being a point corresponding to a left jaw point of the user, and
the fifth reference point being a point corresponding to a right jaw point of the user, and
wherein the at least one processor is configured to:
based on obtaining the current image, track the first reference point, the second reference point, the third reference point, the fourth reference point, and the fifth reference point in the current image based on the information associated with the plurality of reference points, and
identify the circle corresponding to the face of the user based on the upper body direction of the user and coordinates of the first reference point, the fourth reference point, and the fifth reference point with respect to the reference coordinate system.

6. The display apparatus as claimed in claim 1, wherein the at least one processor is configured to:
based on the plurality of reference points not being tracked in images obtained for a predetermined number of frames, delete the information associated with the reference coordinate system and the information associated with the plurality of reference points from the memory,
identify, as an initial image, an image in which the face and the shoulders of the user are identified among images obtained after the predetermined number of frames, and
identify the plurality of reference points and the reference coordinate system in the initial image and store information associated with the identified plurality of reference points and information associated with the identified reference coordinate system in the memory.

7. The display apparatus as claimed in claim 1, wherein the at least one processor is configured to:
delete the information associated with the reference coordinate system and the information associated with the plurality of reference points from the memory at each interval of a predetermined number of frames,
identify, as an initial image, an image in which the face and shoulders of the user are identified among images obtained after the predetermined number of frames, and
identify the plurality of reference points and the reference coordinate system in the initial image and store information associated with the identified plurality of reference points and information associated with the identified reference coordinate system in the memory.

8. The display apparatus as claimed in claim 1, wherein the at least one processor is configured to:
based on obtaining the current image, identify movement of the plurality of reference points based on the coordinates of the plurality of reference points in the frame of the image and the pixel values of the pixels corresponding to the coordinates of the plurality of reference points in the frame of the image, and
track the plurality of reference points in the current image based on the identified movement.

9. The display apparatus as claimed in claim 1, wherein the memory stores a neural network model,
wherein the neural network model is trained to:
receive the information associated with the reference coordinate system and the coordinates of the plurality of reference points with respect to the reference coordinate system,
identify a circle corresponding to the face of the user based on the coordinates of the plurality of reference points, and
output an angle of the direction of the face of the user based on a position of the identified circle with respect to the reference coordinate system, and
wherein the at least one processor is configured to:
identify the direction of the face of the user based on the output angle of the direction the user face obtained by inputting the coordinates of the plurality of reference points in the current image and the information associated with the reference coordinate system into the neural network model.

10. The display apparatus as claimed in claim 1,
further comprising a camera;
wherein the at least one processor is configured to:
based on obtaining the current image through the camera, track the plurality of reference points in the current image based on the information associated with the plurality of reference points.

11. A control method of a display apparatus, the control method comprising:
based on obtaining a current image in which a face and shoulders of a user are identified, tracking a plurality of reference points in the current image based on information associated with the plurality of reference points including coordinates of the plurality of reference points in an image having a frame and pixel values of pixels corresponding to the coordinates of the plurality of reference points that are in the frame of the image;
identifying coordinates of the plurality of reference points in the current image with respect to a reference coordinate system based on information associated with the reference coordinate system;
identifying a direction of the face of the user based on the coordinates of the plurality of reference points identified in the current image; and
displaying a three-dimensional (3D) image corresponding to the identified direction of the face of the user,
wherein the plurality of reference points include a reference point corresponding to a position of the face of the user and reference points corresponding to positions of the user shoulders.

12. The control method as claimed in claim 11, wherein the plurality of reference points include a first reference point corresponding to a central point of the face of the user,
the control method further comprising:
based on obtaining an initial image, in which the face and the shoulders of the user are identified, identifying a plurality of feature points in the initial image;
identifying the plurality of reference points in the initial image based on positions of the plurality of feature points; and
identifying the reference coordinate system having the first reference point as an origin in the initial image based on a positional relationship among the plurality of reference points in the initial image and storing the information associated with the reference coordinate system,
wherein the plurality of feature points include a plurality of points used to recognize the face and the shoulders of the user.

13. The control method as claimed in claim 11, wherein the identifying of the face of the user direction includes:
identifying a circle corresponding to the face of the user based on the coordinates of the plurality of reference points identified in the current image; and
identifying the face of the user direction by identifying a position of the circle with respect to the reference coordinate system based on the information associated with the reference coordinate system.

14. The control method as claimed in claim 11, wherein the plurality of reference points include a first reference point, a second reference point, and a third reference point,
the first reference point being a point corresponding to a central point of the face of the user,
the second reference point being a point corresponding to a left shoulder of the user, and
the third reference point being a point corresponding to a right shoulder of the user,
the method comprising:
based on obtaining the current image, tracking the first reference point, the second reference point, and the third reference point in the current image based on the information associated with the plurality of reference points;
identifying an upper body direction of the user by identifying coordinates of the second reference point and the third reference point with respect to the reference coordinate system based on the information associated with the reference coordinate system;
identifying a circle corresponding to the face of the user based on the upper body direction of the user and coordinates of the first reference point with respect to the reference coordinate system; and
identifying the direction of the face of the user by identifying a position of the circle with respect to the reference coordinate system.

15. A non-transitory computer-readable recording medium storing computer instructions executable by a processor of a display apparatus to cause the display apparatus to perform a control method, the control method comprising:
based on obtaining an image in which a face of a user is identified, identifying a plurality of reference points in the image based on information associated with the plurality of reference points including coordinates of the plurality of reference points in the image having a frame and pixel values of pixels corresponding to the coordinates of the plurality of reference points that are in the frame of the image;
identifying coordinates of the plurality of reference points with respect to a reference coordinate system based on information associated with the reference coordinate system; and
identifying a direction of the face of the user based on the coordinates of the plurality of reference points,
wherein the plurality of reference points include a reference point corresponding to a position of the face of the user and a reference point corresponding to positions of the shoulders of the user.
